(19) Europäisches Patentamt
European Patent Office
Office européen des brevets

(11) **EP 2 328 015 A1**

(12) **EUROPEAN PATENT APPLICATION**
published in accordance with Art. 153(4) EPC

(43) Date of publication:
**01.06.2011 Bulletin 2011/22**

(51) Int Cl.:
**G02F 1/167** *(2006.01)*  **G02F 1/17** *(2006.01)*
**G09F 9/00** *(2006.01)*

(21) Application number: **09809906.2**

(22) Date of filing: **25.08.2009**

(86) International application number:
**PCT/JP2009/064798**

(87) International publication number:
**WO 2010/024255 (04.03.2010 Gazette 2010/09)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **28.08.2008 JP 2008219670**

(71) Applicant: **Bridgestone Corporation
Tokyo 104-8340 (JP)**

(72) Inventors:
• **SAKURAI, Ryo
Kodaira-shi
Tokyo 187-8531 (JP)**

• **OHNO, Shingo
Kodaira-shi
Tokyo 187-8531 (JP)**
• **NISHIDA, Mitsuhiro
Kodaira-shi
Tokyo 187-8531 (JP)**
• **TANAKA, Kanji
Kodaira-shi
Tokyo 187-8531 (JP)**
• **NISHII, Masayuki
Kodaira-shi
Tokyo 187-8531 (JP)**

(74) Representative: **Oxley, Robin John George
Marks & Clerk LLP
90 Long Acre
London
WC2E 9RA (GB)**

(54) **INFORMATION DISPLAY APPARATUS**

(57) An information display device, in which a display medium 3W, 3B having an optical reflectivity and comprised of a particle group containing particles that can be electrically driven is sealed between two panel substrates 5, 6 arranged so as to face each other, at least one of which panel substrates is transparent, and, the display medium is electrically moved via a pair of electrodes provided to the panel substrates and formed by the electrodes 5, 6, thereby to display information, in which the information display device has a structure in which a back side substrate 1, which is one of the two substrates, is connected with a wiring substrate 10; a first through-hole 7 penetrating the back side substrate for electrically connecting electrodes 5-1 and 5-2 provided on a front and a rear surfaces of the back side substrate is formed on the back side substrate, and the wiring substrate 10 is connected with the electrode 5-2 on the rear surface side within an area of the back side substrate; and, a second through-hole 7 for connecting an electrode 6 provided on a display side substrate, which is the other substrate of the two panel substrates, with the electrode 5-4 provided on the rear surface of the back side substrate is further formed.

FIG. 5

## Description

TECHNICAL FIELD

The present invention relates to an information display device in which a display medium having an optical reflectivity and comprised of a particle group containing particles that can be electrically driven is sealed between two panel substrates arranged so as to face each other, at least one of which panel substrates is transparent, and, the display medium is electrically moved via a pair of electrodes provided to the panel substrates and forming a pixel, thereby to display information such as an image.

RELATED ART

As an information display device, a liquid crystal display device (LCD) is widely used. However, in general, it has been known that the liquid display device consumes a large amount of electric power, and has various drawbacks such as a narrow viewing angle. In view of the facts above, as a substitute for the liquid crystal display, there is proposed an information display device in which a display medium having an optical reflectivity and comprised of a particle group containing particles that can be electrically driven is sealed between two panel substrates arranged so as to face each other, at least one of which panel substrates is transparent, and, the display medium is electrically moved via a pair of electrodes provided to the panel substrates and forming a pixel, thereby to display information such as an image.

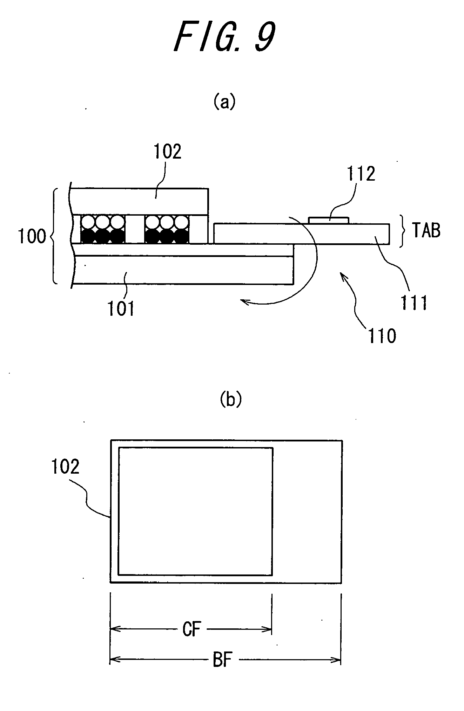

Incidentally, there exists a case where other circuit substrate is externally provided on the display panel side in order to obtain an electrical contact with a driving source for the display device or a control unit side, regardless of whether a liquid crystal or the display medium described above is used or not. FIG. 9(a) is a side view schematically illustrating a structure of a display panel portion in such an information display device, and FIG. 9(b) is a plan view illustrated for explaining a display area of the display panel. As illustrated in FIG. 9(a), on the information display surface side of a substrate 101 of the display panel 100, a circuit substrate 110 is connected by using a tape automated bonding (TAB) or other mounting techniques (hereinafter, simply referred to as TAB technique). Such a circuit substrate 110 is formed, for example, such that an electronic component 112 such as a driver IC for driving is placed on a flexible printed circuit (FPC) 111. Therefore, a desired display can be performed on an information display surface 102 by supplying a control signal from a not shown control unit via the circuit substrate 110 to the display panel 100.

However, in a case where the circuit substrate 110 is connected with the substrate 101 of the display panel 100 on the information display side thereof, an area that can display information is restricted to a CF as illustrated in FIG. 9(b), which is narrower than an area BF that can be potentially used for displaying information. This is contrary to a recent strong demand for an information display device having a thinner and further miniaturized size, and having a narrowed frame portion (hereinafter, referred to as "reduced frame width").

In view of the facts described above, for example, Patent Literature 1 proposes a liquid crystal display device that realizes reduced thickness, reduced area, and reduced frame width. In this liquid crystal display device, a wire for transmitting a signal for driving is formed on the rear surface of a substrate constituting a liquid crystal panel portion, and a circuit for driving is connected with this wire. Patent Literature 1 discloses a structure using the TAB technique in which a circuit for driving disposed on a rear side of the liquid crystal panel portion is connected with a TAB portion (portion of a flexible wiring substrate such as FPC), such that the TAB portion is folded back from a front surface side of the liquid crystal. With this structure, the circuit for driving and the like externally provided can be arranged on the rear side of the liquid crystal panel portion, whereby it is possible to reduce the width of the frame and reduce the size of the device itself.

Related Art Reference

Patent Literature

Patent Literature 1: Japanese Patent Application Laid-open No. 2000-98417

SUMMARY OF THE INVENTION

PROBLEMS TO BE SOLVED BY THE INVENTION

As described above, with the structure proposed by Patent Literature 1, it is possible to secure the contact between the circuit for driving and the like disposed on the rear side and the electrode wiring on the front side, by routing the TAB portion from the front side to the rear side. However, with this structure, the TAB portion curves and externally protrudes from the substrate forming a basic shape of the display panel, and hence, the shape thereof becomes large. Further, such a TAB portion may interfere with other portion in the vicinity thereof, possibly causing a hindrance to an assembling process and the like. As described above, with the structure disclosed in Patent Literature 1, there is still room for improvement.

In view of the facts described above, an object of the present invention is to solve the problem described above, and propose an information display device that achieves reduced frame width, reduced device size, and further improved handling property.

MEANS FOR SOLVING THE PROBLEM

The object above can be achieved by an information display device, in which a display medium having an optical reflectivity and comprised of a particle group containing particles that can be electrically driven is sealed between two panel substrates arranged so as to face each other, at least one of which panel substrates is transparent, and, the display medium is electrically moved via a pair of electrodes provided to the panel substrates and forming a pixel, thereby to display information, in which the information display device has a structure in which a back side substrate, which is one of the two substrates, is connected with a wiring substrate; a first through-hole penetrating the back side substrate for electrically connecting electrodes provided on a front and a rear surfaces of the back side substrate is formed on the back side substrate, and the wiring substrate is connected with the electrode on the rear surface side within an area of the back side substrate; and, a second through-hole for connecting an electrode provided on a display side substrate, which is the other substrate of the two panel substrates, with the electrode provided on the rear surface of the back side substrate is further formed.

Further, it may be possible to employ a structure in which an electronic component for controlling drive of the display medium is provided on the wiring substrate. Yet further, it is possible that the back side substrate is a flexible substrate, and the electrodes provided on the front and the rear surfaces are metal substrates.

Yet further, it may be possible to employ a structure in which the wiring substrate is connected with the electrode provided on the rear surface of the back side substrate so as to direct toward the inner side of an area of the back side substrate and so as not to protrude externally from the area of the back side substrate.

A preferred mode for achieving the object above includes: the information display device, in which the particle that can be electrically driven is a chargeable particle, and the display medium comprised of the particle group containing said chargeable particles is moved by applying an electric field generated between the pair of electrodes provided to the panel substrates and forming the pixel, thereby to display information; and, the information display device, in which the pair of electrodes provided to the panel substrates and forming the pixel are opposing electrodes formed such that line electrodes provided to the respective two panel substrates are arranged so as to face each other and perpendicularly intersect each other.

EFFECT OF THE INVENTION

According to the present invention, electrical connection with an electronic component and a driving circuit provided on a rear surface of a substrate of an information display device is realized by a through-hole formed in the substrate, and unlike the conventional technique, it is not necessary to employ a TAB portion that externally protrudes from the substrate, whereby it is possible to achieve a display unit having reduced frame width as well as an information display device having reduced size. Further, since there does not exist any externally protruding portion such as the TAB portion, it is possible to improve a handling property at the time of an assembling process.

BRIEF DESCRIPTION OF THE DRAWINGS

FIGS. 1(a) and 1(b) are diagrams for explaining a principle configuration of a display panel, which is a target of the present invention.

FIGS. 2(a) and 2(b) are diagrams for explaining other principle configuration of the display panel, which is the target of the present invention.

FIGS. 3(a) and 3(b) are diagrams for explaining other principle configuration of the display panel, which is the target of the present invention.

FIG. 4 is a diagram for explaining other principle configuration of the display panel, which is the target of the present invention.

FIG. 5 is a diagram illustrating a structure of wiring connection, which is desired to be applied to the information display device.

FIGS. 6(a) through 6(d) are plan perspective views each schematically illustrating a state of line electrodes disposed on a display side substrate, or line electrodes or connection electrodes disposed on a back side substrate.

FIG. 7 is a diagram illustrating an example of a case where electrodes provided to front and rear surfaces of the back side substrate are electrically connected with each other by forming a through-hole.

FIG. 8 is diagram illustrating a case where a FPC is connected with the electrode on the rear side substrate through an anisotropic conductive material.

FIG. 9 is a diagram illustrating a conventional information display device.

BEST MODE FOR CARRYING OUT THE INVENTION

Hereinbelow, an information display device and a display panel according to an embodiment of the present invention will be described with reference to the drawings. The information display device according to the present invention is based on a technique in which information is displayed by sealing a display medium composed of a particle group containing, for example, chargeable particles in a space formed between two panel substrates, and moving the display medium electrically, for example, in accordance with electric fields. Said space may be filled with gas, be filled with an insulating liquid, or be in a vacuumed state. In order to easily understand the present invention, description will be first made of a schematic configuration of a display panel portion of the information display device that displays information such as a character or an image, by moving the display medium composed of the particle group containing chargeable particles with electric fields.

In the display panel, the electric field is applied to the display medium sealed in the space between the two opposing substrates and composed of the particle group containing the chargeable particles. The display medium is drawn by force resulting from the electric field or coulomb force along the direction of the applied electric field, and moves due to change of the direction of the applied electric field, whereby information such as an image is displayed. Therefore, the display panel needs to be designed so as to be able to maintain stability at the time when the display medium uniformly moves and the displayed information is repeatedly rewritten, or when the displayed information continues to be displayed. In addition to the attraction force caused by the coulomb force between the respective particles, the force acting on the particles constituting the display medium may include electric image force with the electrode or substrate, intermolecular force, liquid cross-linking force, gravity and the like.

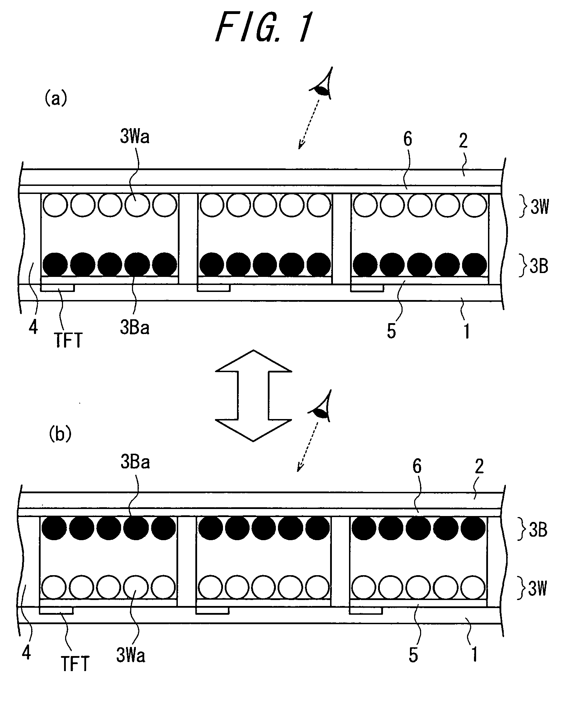

An example of the display panel will be described with reference to FIGS. 1(a) and 1(b) through FIG. 4.

In the example illustrated in FIGS. 1(a) and 1(b), at least two types of display media (in this example, a white color display medium 3W comprised of a particle group containing negatively electrified white color particles 3Wa and a black color display medium 3B comprised of a particle group containing positively electrified black color particles 3Ba are illustrated) comprised of particle groups containing particles having at least an optical reflectivity and an electrification property, which are different between the display medium types, are moved perpendicular to substrates 1, 2 in each cell (display medium containing section) formed by a partition wall 4 in accordance with an electric field generated by applying a voltage across a pair of electrodes formed by an electrode 5 (pixel electrode) provided to the substrate 1 and having a TFT and an electrode 6 (common electrode (conductive film)) provided to the substrate 2. Then, a white display can be performed in a dot form by making the white color display medium 3W visually recognized by an observer as illustrated in FIG. 1(a), or a black display can be performed in a dot form by making the black color display medium 3B visually recognized by the observer as illustrated in FIG. 1(b). In this example, pixels are arranged in a matrix manner, so that dot matrix display of white or black can be performed in accordance with the way that the white display medium and the black display medium are moved in each cell.

Note that, in FIGS. 1(a) and 1(b), a partition wall existing at the frontward side is omitted. It may be possible to dispose the respective electrodes 5, 6 on the outside of the substrates 1, 2, or on the inside of the substrates 1, 2, or is disposed so as to be embedded in the substrate.

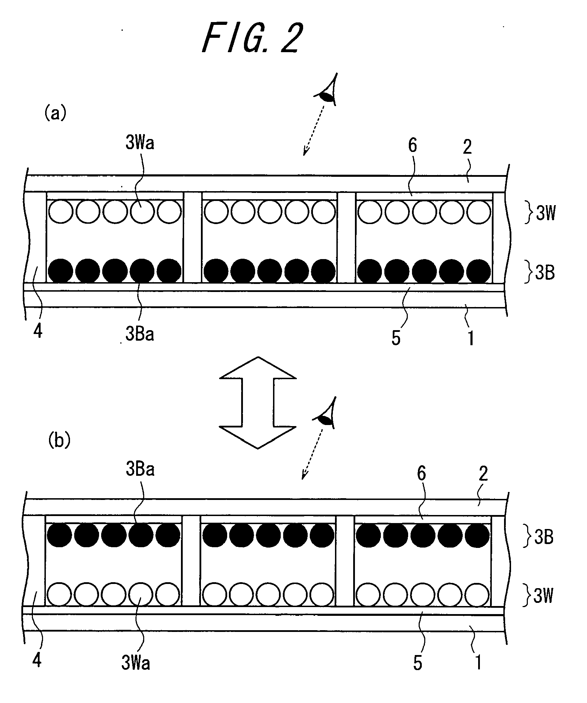

In an example illustrated in FIGS. 2(a) and 2(b), at least two types of display media (in this example, a white color display medium 3W comprised of a particle group containing negatively electrified white color particles 3Wa and a black color display medium 3B comprised of a particle group containing positively electrified black color particles 3Ba are illustrated) comprised of particle groups containing particles having at least an optical reflectivity and an electrification property, which are different between the display medium types, are moved perpendicular to substrates 1, 2 in each cell formed by a partition wall 4 in accordance with an electric field generated by applying a voltage across a pair of pixel electrodes formed by an electrode 5 (line electrode) provided to the substrate 1 and an transparent electrode 6 (line electrode) provided to the substrate 2, the respective electrodes facing each other and perpendicularly intersecting each other. Then, a white display can be performed with dots by making the white color display medium 3W visually recognized by an observer as illustrated in FIG. 2(a), or a black display can be performed by making the black color display medium 3B visually recognized by the observer as illustrated in FIG. 2(b). In this example, each pixel corresponds to each cell, but it may be possible that those do not correspond to each other. The respective pixels (dots) are arranged in a matrix manner, so that dot matrix display of white or black can be performed in accordance with the way that the white display medium and the black display medium are moved.

Note that, in FIGS. 2(a) and 2(b), a partition wall existing at the frontward side is omitted. It may be possible to dispose the respective electrodes 5, 6 on the outside of the substrates 1, 2, or on the inside of the substrates 1, 2, or is disposed so as to be embedded in the substrate.

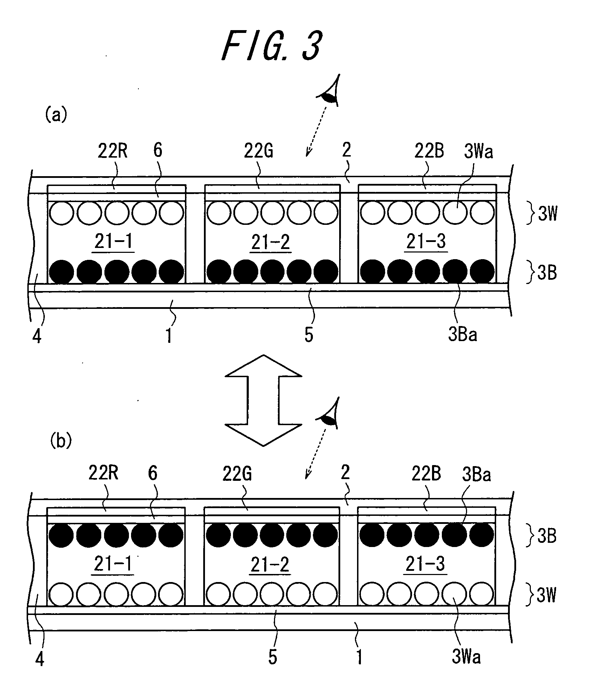

In an example illustrated in FIGS. 3(a) and 3(b), an example of color display in a display unit (1 dot) formed by three cells and three pixels is illustrated. In the example illustrated in FIGS. 3(a) and 3(b), as the display medium, all cells 21-1 through 21-3 are filled with a negatively electrified white color display medium 3W and a positively electrified black color display medium 3B. A red color filter 22R is provided on an observer side of the first cell 21-1; a green color filter 22G is provided on the observer side of the second cell 21-2; and, a blue color filter 22B is provided on the observer side of the third cell 21-3. The display unit (1 dot) is formed by three cells of the thirst cell 21-1, the second cell 21-2 and the third cell 21-3 described above.

In this example, as illustrated in FIG. 3(a), the white dot display is performed for the observer by moving the white color display media 3 W in all of the first cell 21-1 through the third cell 21-3 to the observer side. Further, as illustrated in FIG. 3B, the black dot display is performed for the observer by moving the black color display media 3B in all of the first cell 21-1 through the third cell 21-3 to the observer side. Note that, in the configuration exemplarily illustrated in FIGS. 3(a) and 3(b), a partition wall existing at the frontward side is omitted. Multiple color display can be performed through cooperation of the color filters and the white and black display media by appropriately moving the display media in the respective cells.

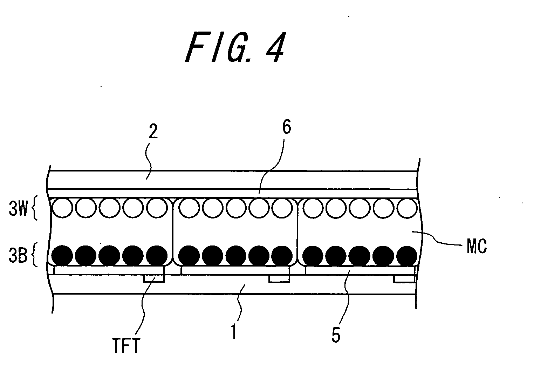

In an example illustrated in FIG. 4, the white and black dot display is performed such that a white particle group and a black particle group each having electrified property and sealed in a microcapsule together with an insulating liquid are disposed as the display media between the panel substrates 1 and 2; and, the electric field is applied from a pair of electrodes formed by the transparent common electrode 6 provided to the substrate on the observer side, and the pixel electrode 5 having TFT and provided to the substrate on the rear surface side, which is not required to be transparent. This example employs a type in which a microcapsule MC is disposed between the substrates, and, the display media 3W and 3B in the microcapsule MC are driven (electrophoresis) by using the electric field generated between the pair of pixel electrodes formed such that the pixel electrode 5 having TFT and formed on the substrate 1 (on the rear surface side) and the transparent common electrode (transparent conductive film) 5 formed on the substrate 2 (on the observer side) face each other. The gap between the substrates is maintained at a predetermined space by using a spacer.

It should be noted that it is possible to employ as the substrates described above a glass substrate, a resin sheet substrate, a resin film substrate or other substrate. The substrate 2 on the display surface side (observer side) is a transparent substrate. On the substrate 2, an electrode (the common electrode 6 or line electrode 6 illustrated in FIG. 1 and the like) for applying a predetermined voltage having polarity (positive or negative) is provided. On the surfaces of the respective two rear and front substrates 1 and 2 constituting the display panel described above, there are formed the common electrode and the pixel electrode or line electrode so as to form a matrix-formed pair of electrodes. When an electric current is applied across the electrodes, the electric field is applied to the display media (particle group), and the display media are moved, whereby it is possible to achieve the above-described structure that can perform a desired display.

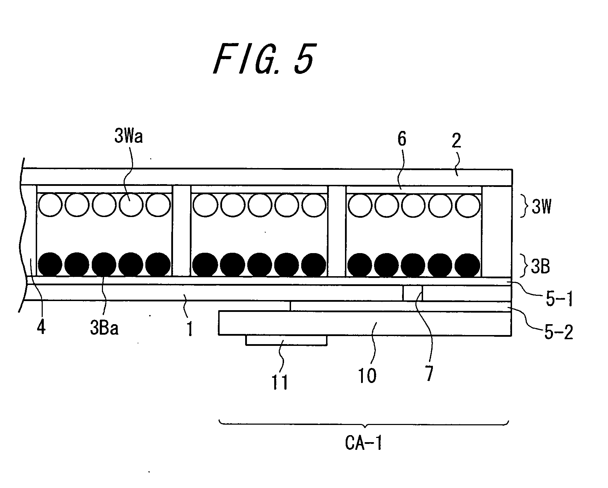

Further, a preferred structure that the above-described display panel has will be described with reference to the drawings. FIG. 5 is a diagram illustrating a structure for wiring connection desirably applied to the information display device. Although the display panels having various structures are exemplarily illustrated in FIGS. 1 through 4, FIG. 5 illustrates an example of an information display device in a case where the structure for the wiring connection is applied to a structure of the display panel illustrated in FIG. 2.

In the structure of the display panel illustrated in FIG. 2, both the line electrode 5 of the substrate 1 and the line electrode 6 of the substrate 2 are formed on the inner side (mutually facing side of the substrates), and the line electrode 5 and the line electrode 6 are structured so as to form a pair of pixel electrodes in a manner that the line electrode 5 and the line electrode 6 face each other, and perpendicularly intersect each other. In the structure illustrated in FIG. 5, a line electrode 5-1 is formed on the inner side (front side of the back side substrate 1) of the substrate 1 (hereinafter, referred to as back side substrate 1) disposed on the back surface side. Further, on the opposite side thereof, a connection electrode 5-2 is formed on the outer side (rear side of the back side substrate 1, and lower side in FIG. 5).

Further, a connection area CA-1 is formed on the back side substrate 1, and in this area, there is provided a through-hole 7 penetrating the back substrate 1 and serving as a first through-hole for electrically connecting the electrode 5-1 on the front side with the electrode 5-2 on the rear side of the back substrate 1. Such a through-hole 7 can be formed by a known boring device such as a commercial laser boring device.

Further, a FPC 10 serving as a wiring substrate is connected with the electrode 5-2 provided on the rear side. Such a FPC 10 may be mounted on the rear side of the back substrate 1 by using the TAB technique in a state where a micro-electronic component 11 such as a driver IC for driving a display portion is mounted. The FPC 10 can be connected with the electrode 5-1 on the front side of the back substrate 1 via the through-hole 7. In this example, the size of the FPC 10 is defined so as not to externally overreach (protrude) especially from the area of the back side substrate 1. Therefore, with this structure, there exists no portion that externally protrudes and causes a hindrance. Note that electrical conductivity is secured in the through-hole 7 by boring a hole by using a laser boring device and then applying gold plating to the hole.

By applying the wiring structure as illustrated in FIG. 5, it is possible to realize electric connection with the electronic component 11 or other driving circuit disposed on the rear surface of the display panel of the information display device by the through-hole 7 formed on the back side substrate 1. Therefore, unlike the conventional technique, it is not necessary to employ the TAB portion that externally protrudes from the substrate, and it is possible to achieve a reduction in realize frame width, and consequently, to achieve a reduction in size of the information display device. Further, the display panel portion, which is a semi-finished display panel before being assembled to the main body of the information display device, does not have externally protruding portion like the above-described TAB portion, and hence, it is possible to improve the handling property during the assembling process.

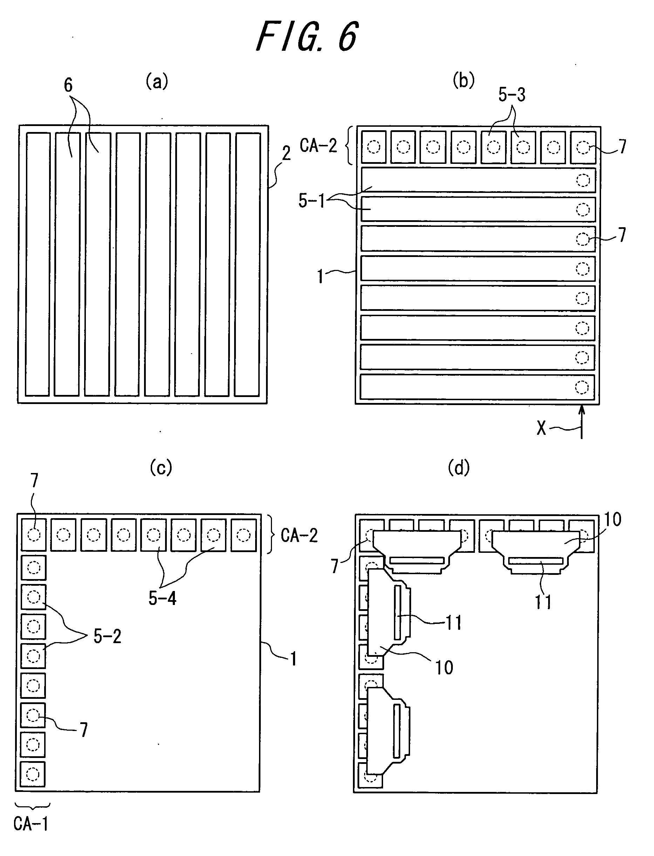

The structure having the through-hole described with reference to FIG. 5 can also be applied to a display panel having other structured portion that routes the wiring. Further, this point will be described with reference to FIG. 6.

FIGS. 6(a) through 6(d) are plan perspective views each schematically illustrating a state of line electrodes disposed on a transparent substrate 2 on the display surface side on the upper side (hereinafter, display side substrate 2), and line electrodes or connection electrodes disposed on a back side substrate 1 on the lower side so as to be able to be easily understood.

FIG. 6(a) illustrates line electrodes 6 (in this example, seven electrodes) disposed on the display side substrate 2. FIG. 6(b) is an upper plan perspective view looking down the back side substrate 1 on the lower side from above. FIG. 6(c) is a lower plan perspective view looking up the rear side substrate 1 from below (FIG. 6(c) illustrates a rear surface of FIG. 6(b) in a manner that it is opened and developed in a right and left direction).

A configuration of the side view of FIG. 6(b) as viewed from the arrowed X direction corresponds to a structure of the above-described CA-1 potion illustrated in FIG 5. The above-described connection area CA-1 is secured as an area for routing the line electrode 5-1 on the front surface side of the back substrate 1 to the rear surface side thereof. In this connection area CA-1, the connection electrode 5-2 is formed on the rear surface side of the back substrate 1. The through-hole 7 is formed as the first through-hole so as to electrically connect the line electrode 5-1 on the front surface with the connection electrode 5-2 on the rear side.

The above-described connection area CA-1 in FIG. 5 and FIG. 6 is a structure example of a case where the line electrode 5-1 on the front surface side of the back side substrate 1 is routed to the rear surface side by making the most use of the through-hole 7, but the structure is not limited to this.

Further, a connection area CA-2 for routing the line electrodes 6 on the display side substrate 2 to the rear surface side of the back side substrate 1 will be described. At one end of the back side substrate 1 (upper side in FIG. 6(b)), the connection area CA-2 is secured for routing the line electrodes 6 on the display side substrate 2 on the upper side. In this connection area CA-2, connection electrodes 5-3 corresponding to the line electrodes 6 are formed on the front surface of the back side substrate 1. Then, as illustrated in FIG. 6(c), connection electrodes 5-4 corresponding to the connection electrodes 5-3 are formed on the rear surface of the back side substrate 1. Similarly, through-holes 7 are formed as a second through-hole so as to electrically connect the connection electrodes 5-3 on the front side with the connection electrodes 5-4 on the rear side. As described above, in a structure in which the second connection area CA-2 is additionally formed, the line electrodes 6 on the display side substrate 2 on the upper side can be similarly routed to the connection electrodes 5-4 on the rear surface of the back substrate 1. Thus, according to the structure exemplarily illustrated in FIG. 6, not only for the electrodes on the back side substrate 1, the externally protruding TAB portion is not necessary for the electrodes on the display side substrate 2, whereby it is possible to realize a structure having reduced frame width. More specifically, as illustrated in FIG. 6(d), it is possible to reliably realize the structure having the reduce frame width, by connecting the FPC 10 serving as the wiring substrate with the electrodes 5-4 provided on the rear surface of the back side substrate 1 so as to direct toward the inner side of an area of the back substrate and so as not to externally protrude from the area of the back substrate.

It should be noted that, since the display side substrate 2 and the back side substrate 1 face each other with a space therebetween, it is only necessary to place, for example, anisotropic conductive adhesive in an opposing space between the line electrodes 6 illustrated in FIG. 6(a) and the connection electrodes 5-3 illustrated in FIG. 6(b) to electrically connect the line electrodes 6 and the connection electrodes 5-3.

As described above, it is possible to obtain the display panel having the reduced frame width, by mounting the FPC having the electronic component 11 on the connection electrodes 5-2 corresponding to the line electrode 5-1 on the back side substrate 1, and the connection electrode 5-4 corresponding to the line electrode 6 on the display side substrate 2 through the TAB technique and the like, as illustrated in FIG. 6(d). Accordingly, in the display panel, which is a semi-finished product before being assembled to the main body of the information display device, the TAB portion and the like do not externally protrude, and hence, the thus-obtained display panel has excellent handling property.

It should be noted that, in a case of the above-described conventional display panel of the liquid crystal display device, the electrode material used for the rear surface is thin, and hence, it is difficult to, after through-hole process, apply plating to the back side electrode to provide conductivity. Therefore, it is necessary to form a mounting surface for transmitting signals to the back surface electrode such as TAB on the same surface as the display surface. For this reason, as previously described with reference to Patent Literature 1, there was no other choice but to employ the TAB and the like that protrudes in a bending manner.

On the other hand, as described above, the present invention relates to a total reflection type display panel that employs a structure in which the display medium comprised of a particle group is moved between the substrates, and hence, in the present invention, it is possible to use, on the back side thereof, an opaque electrode made of metal or a panel substrate not having optical transparency. Further, although trade-off with the size of the particles constituting the display media has to be taken into account, it is possible to use an electrode having a thickness of several micrometers, thickness of which is required for applying plating to the through-hole. By applying the through-hole process, it is possible to realize the display panel having the reduced frame width without folding the TAB portion.

The through-hole process can be easily performed for a plastic substrate, and hence, it is preferable for the back side substrate to be the plastic substrate. Further, the back side is not necessary to be transparent, and hence, it is also preferable to employ a configuration in which an opaque metal electrode is provided on an opaque plastic substrate. As compared with the ITO electrode, the metal electrode has small electrical resistance and excellent flexibility, and hence, it is preferable to employ a configuration of the display panel portion in which the metal electrode is provided to the back side substrate made of flexible plastic.

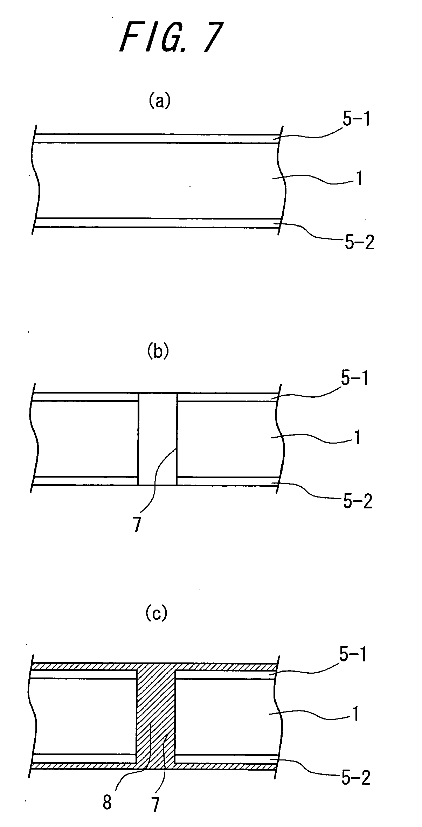

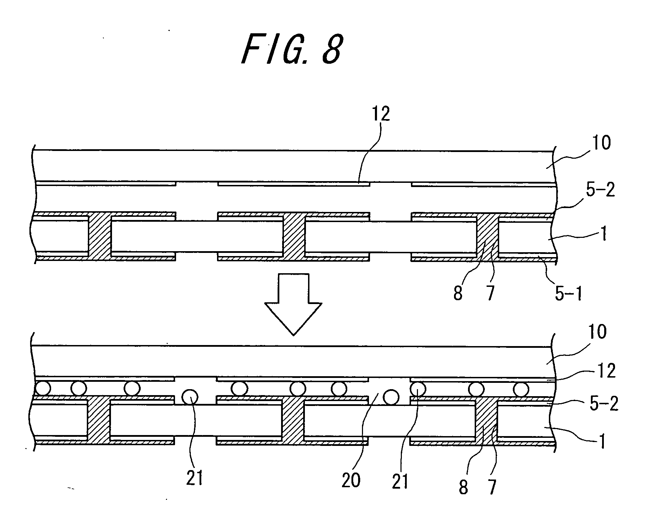

Further, with reference to FIG. 7, description will be made of an example of a case where electrodes provided on the front and the rear surfaces of the back side substrate 1 are electrically connected with each other by forming a through-hole. Yet further, with reference to FIG. 8, description will be made of an example of a case where an electrode 5-2 on the rear side of the back side substrate 1 is connected with a FPC 10 serving as a wiring substrate. Note that, in each of FIG. 7 and FIG. 8, a part of the back side substrate 1 is enlarged and schematically illustrated, and description will be made by attaching the reference numbers used in FIG. 5 for the purpose of easy understanding of the description.

FIG. 7(a) illustrates a back side substrate 1 in which electrodes 5-1 and 5-2 are formed at predetermined positions on both the front and the rear surfaces. Such a structure can be obtained such that copper foils are layered on both surfaces; patterning is performed by using photolithography; and then the electrodes 5-1 and 5-2 are formed at the predetermined positions on the front and the rear surfaces, for example. Next, FIG. 7(b) illustrates a state where, by emitting a laser light, a through-hole 7 having a diameter of, for example, about 100 μm is formed. In FIG. 7(c), by applying a plating process, the inner side of the through-hole 7 and in the vicinity thereof are plated with an electrically conductive metal 8 such as gold or copper, whereby it is possible to electrically connect the electrode 5-1 and the electrode 5-2 respectively located on the front and the rear surfaces.

A diameter of the through-hole 7 is formed so as to be smaller than widths of the electrode 5-1 and the electrode 5-2 respectively located on the front and the rear surfaces. The electrically conductive metal 8 is formed through the plating process so as not to extend over adjacent electrodes 5-1 or adjacent electrodes 5-2.

FIG. 8 illustrates one preferred mode of a case where an FPC 10 serving as a wiring substrate is connected with the back side substrate 1 formed as described above. Note that, in FIG. 8, illustration of the display panel portion located on the front side of the back side substrate 1 is omitted; unlike the illustration in FIG. 5, illustration is made upside down; and, illustration is made of a state where the FPC 10 is connected, from above, with the electrode 5-2 provided on the back side of the back side substrate 1.

FIG. 8 illustrates a case where the FPC 10 is connected with the electrode 5-2 on the back side substrate 1 through an anisotropic conductive material 20. Note that, in FIG. 8, electrodes 12 are formed on the FPC 10.

The anisotropic conductive material 20 has conductive particles 21 dispersed therewithin, and electrical conductivity is formed between electrodes sandwiching the conductive particles 21 (or further through the plating 8). As the anisotropic conductive material 20, it may be possible to employ any material of: anisotropic conductive sheet (ACS), anisotropic conductive film (ACF), anisotropic conductive adhesive (ACA), and the like.

As described above, the anisotropic conductive material 20 can be preferably used for connecting the electrode 5-2 on the back side substrate 1 with the FPC 10. However, there is a possibility that connection portion is peeled off at the time of bending or corrodes due to the influence of water. Therefore, it is desirable to provide a structure that can prevent these troubles. For this reason, it is desirable that a reinforcing material having both elasticity and moisture-proof property is applied in the vicinity of the electrodes between the back side substrate 1 and the FPC 10 whose connection is made by the anisotropic conductive material 20.

For such a reinforcing material, it is possible to preferably use a commercially available material such as a silicone-based moisture-proof material and an acrylic-based moisture-proof material, for example.

It should be noted that the description above has been made of a case where the FPC is mounted using the TAB technique, but mounting of the FPC is not limited to this. It may also be possible to employ a chip-on-flexible-printed-circuitry (COF) technique in which a semiconductor bare chip that is not packaged is mounted directly on the FPC to perform wiring.

Below, description will be further made of each member constituting the information display device to which the present invention is directed.

The above-described substrate 2 on the display side, which is the observer side of the display panel, is a transparent substrate through which a color of the display medium can be recognized from the outer side of the panel, and is formed preferably of a material having high transmissivity for the visible light and having favorable heat-resisting property. On the other hand, the other substrate 1 serving as the back substrate may be either transparent or opaque. Examples of the substrate material include an organic-polymer-based substrate such as polyethylene terephthalate (PET), polyethylene naphthalate (PEN), polyethylene (PE), polycarbonate (PC), polyimide (PI), polyethersulfone (PES) and acrylic, a glass sheet, a quartz sheet, a metal sheet and the like, and of the materials described above, a transparent material is used for the display surface side. The thickness of the substrate is preferably in a range of 2 to 2000 μm, and more preferably in a range of 5 to 1000 μm. In a case where the substrate is too thin, it is difficult to maintain the strength and uniformity of the space between the substrates. On the other hand, in a case where the thickness exceeds 2000 μm, inconvenience occurs at the time of making the display panel thinner.

Examples of materials for forming the electrode provided on the substrate above include: metals such as aluminum, silver, nickel, copper and gold; conductive metallic oxides such as indium tin oxide (ITO), indium zinc oxide (IZO), aluminum doped zinc oxide (AZO), indium oxide, conductive tin oxide, antimony tin oxide (ATO) and conductive zinc oxide; and conductive polymers such as polyaniline, polypyrrole and polythiophene, depending on applications, and it is possible to appropriately select from the materials described above to use. As a method of forming the electrode, it is possible to use: a method of subjecting the materials exemplified above to pattern formation to be a thin film shape by using a sputtering method, a vacuum deposition method, a chemical vapor deposition (CVD) method and a coating method; a method of laminating metal foils (for example, rolling copperfoil method); and a method of performing pattern formation by applying a mixture of conductive agent with solvent or synthetic resin binder.

The electrode provided in an information display area of the substrate 2 on the viewer side (display surface side) needs to be transparent, while it is not necessary for the electrode provided on the back side substrate 1 to be transparent. In any case, it is possible to preferably use the above-described conductive materials that can be used for pattern formation. Note that a thickness of the electrode provided in the information display area of the viewer side substrate 2 is set such that the conductivity can be secured and any trouble in optical transparency is not caused, and is in a range of 0.01 to 10 $\mu$m, preferably, in a range of 0.05 to 5 $\mu$m. The material and thickness of the electrode provided on the back side substrate is set similarly to the electrode provided on the display side substrate described above, but it is not necessary for the electrode provided on the back side substrate to be transparent. The electrode provided in an area other than the information display area needs not to be a transparent electrode. Therefore, it is preferable to use a metal electrode having small electric resistance. This is because, with this configuration, it is possible to reduce the width and the thickness of the electrode, whereby the wiring space for the electrode can be reduced.

Depending on application, a shape of a partition wall provided to the substrate is optimally set in accordance with types of display media concerning display, and shapes and arrangement of the electrode to be disposed, and is not limited in general, and a width of the partition wall is set in a range of 2 to 100 $\mu$m, preferably, in a range of 3 to 50 $\mu$m. A height of the partition wall can be set within the gap between the substrates such that a portion for securing the gap between the substrates is set at the height same as the gap between the substrates, and a portion for forming a cell other than the portion for securing the gap between the substrates is set at the height same as the gap between the substrate or the height lower than the gap between the substrate. Further, it is considered that the partition wall is formed by a both-rib method of forming a rib on each of the opposing substrates 1, 2 and then connecting them, or by a single-rib method of forming a rib on the single side of the substrates. In this invention, it is possible to preferably employ both of the methods described above.

Examples of the method of forming the partition wall include a mold transfer method, a screen printing method, a sandblast method, a photolithographic method, and an additive method. Any method can be preferably applied to the display panel provided to the information display device according to the present invention, but, of the methods described above, the photolithographic method using a resist film or the mold transfer method is preferably used.

The display medium comprised of the particle group containing the chargeable particles, which can be applied to the present invention, will be described. The display medium used is a display medium formed only by the chargeable particles, or formed by a mixture with other particles. The chargeable particles are formed principally by resins, which may contain a charging control agent, colorant, inorganic additive and the like depending on applications. Examples of the resins, charging control agent, colorant, and other additives will be described below.

Examples of the resins include a urethane resin, urea resin, acrylic resin, polyester resin, acrylic urethane resin, acrylic urethane silicone resin, acrylic urethane fluororesin, acrylic fluororesin, silicone resin, acrylic silicone resin, epoxy resin, polystyrene resin, styrene-acrylic resin, polyolefin resin, butyral resin, vinylidene chloride resin, melamine resin, phenol resin, fluororesin, polycarbonate resin, polysulfone resin, polyether resin, and polyamide resin, and two or more resins may be mixed. In particular, considering control of adhesion strength with the substrate, it is preferable to use the acrylic urethane resin, acrylic silicone resin, acrylic fluororesin, acrylic urethane silicone resin, acrylic urethane fluororesin, fluororesin, and silicone resin.

There is not any particular limitation of the charging control agent, but examples of negative charging control agents include salicylic acid metal complex, metal complex azo dye, metal complex (including metal ion or metal atom) oil-soluble dye, quaternary ammonium salt compound, calixarene compounds, boron containing compound (benzilic acid boron complex), and nitroimidazole derivative. Examples of positive charging control agents include nigrosine dye, triphenylmethane-based compound, quaternary ammonium salt compound, polyamine resin, and imidazole derivative. Additionally, it may be possible to employ ultrafine powder silica; ultrafine powder titanium oxide; metallic oxides such as ultrafine powder alumina; nitrogen containing ring compound such as pyridine and its derivative; and resin containing salt, various kinds of organic pigments, fluorine, chlorine and nitrogen.

As exemplified below, various types and colors of organic and inorganic pigments and dyes may be used as the colorant. Black colorant includes carbon black, copper oxide, manganese dioxide, aniline black, active carbon and the like. Blue colorant includes C.I. pigment blue 15:3, C.I. pigment blue 15, iron blue, cobalt blue, alkali blue lake, victoria blue lake, phthalocyanine blue, metal-free phthalocyanine blue, phthalocyanine blue partial chlorine compound, first sky blue, indanthrene BC and the like. Red colorant includes colcothar, cadmium red, red lead, mercury sulfide, cadmium, permanent red 4R, lithol red, pyrazolone red, watching red, calcium salt, lake red D, brilliant carmine 6B, eosine lake, rhodamine lake B, alizarin lake, brilliant carmine 3B, C.I.pigment red 2 and the like.

Yellow colorant includes chrome yellow, zinc yellow, cadmium yellow, yellow iron oxide, mineral first yellow, nickel titanium yellow, navel yellow, naphthol yellow S, hansa yellow G, hansa yellow 10G, benzidine yellow G, benzidine yellow GR, quinoline yellow lake, permanent yellow NCG, tartrazine lake, C.I. pigment yellow 12 and the like. Green colorant includes chrome green, chromium oxide, pigment green B, C.I. pigment green 7, Malachite green lake, final yellow green G and the like. Orange colorant includes red chrome yellow, molybdenum orange, permanent orange GTR, pyrazolone orange, Balkan orange, indunsren brilliant orange RK, benzidine orange G, Indusren brilliant orange GK, C.I. pigment orange 31 and the like. Purple colorant includes manganese purple, first violet B, methyl violet lake and the like. White colorant includes zinc oxide, titanium oxide, antimony white, zinc sulphide and the like.

Extender includes baryta powder, barium carbonate, clay, silica, white carbon, talc, alumina white and the like. Further, as various dyes such as basic dye, acidic dye, dispersion dye, direct dye and the like, there are nigrosine, methylene blue, rose bengal, quinoline yellow, and ultramarine blue.

Examples of inorganic additives include titanium oxide, zinc oxide, zinc sulphide, antimony oxide, calcium carbonate, white lead, talc, silica, calcium silicate, alumina white, cadmium yellow, cadmium red, cadmium orange, titanium yellow, iron blue, ultramarine blue, cobalt blue, cobalt green, cobalt violet, iron oxide, carbon black, manganese ferrite black, cobalt ferrite black, copper powder, aluminum powder and the like.

The pigments and inorganic additives described above may be used alone or in combination therewith. Particularly, carbon black is preferable as the black pigment, and titanium oxide is preferable as the white pigment. Chargeable particles having a desired color can be manufactured by mixing the colorants described above.

Further, it is preferable that the particles that are used for the particle group of the display medium and can be electrically driven, including the chargeable particle, have an average particle diameter d(0.5) in a range of 1 to 20 $\mu$m, and preferably, in a range of 5 to 15 $\mu$m, and the respective particles have a uniform size. In a case where the average particle diameter d(0.5) exceeds this range, the image sharpness on the display deteriorates, and, on the other hand, in a case where the average particle diameter is smaller than this range, a cohesive force between the particles becomes undesirably large, which adversely affects the movement of the particles as the display medium.

Further, it is desirable that, regarding the particle diameter distribution of the particles that are used for the particle group of the display medium and can be electrically driven, including the chargeable particle, a particle diameter distribution Span, which is defined by the following expression, is less than 5, preferably less than 3.

$$\text{Span} = (d(0.9) - d(0.1))/d(0.5)$$

(where, d(0.5) indicates a value of the particle diameter expressed by $\mu$m in which 50% of the particles have a diameter larger than this value and 50% of the particles have a diameter smaller than this value, d(0.1) indicates a value of the particle diameter expressed by $\mu$m in which a percentage of the particles having a diameter smaller than or equal to this value is 10%, and d(0.9) indicates a vale of the particle diameter expressed by $\mu$m in which a percentage of the particles having a diameter smaller than or equal to this value is 90%.)

By setting the Span to less than or equal to 5, the sizes of the particles are made uniform and the particles can move as the uniform display medium.

Yet further, it is important that, for the particle groups used, a ratio of d(0.5) of the particle group having the smallest diameter with respect to d(0.5) of the particle group having the largest diameter is set to 10 or lower. Even if the particle diameter distribution Span is set to be smaller, the particles constituting the display media and having different electrification properties with each other are moved in the opposite directions to each other, and hence, it is preferable that the particle sizes are formed so as to be equal to each other in order to make the particles constituting the display media easily moved in the opposite directions to each other, which is realized by the above-described range.

It should be noted that the particle diameter distribution and the particle diameter of the particle constituting the display media described above can be obtained with a laser diffraction/scattering method and the like. By emitting a laser light to the particles to be measured, a light intensity distribution pattern occurs spatially due to a diffraction/scattering light. This light intensity pattern is in the relationship with the particle diameter, and hence, the particle diameter and the particle diameter distribution can be obtained.

The particle diameter and the particle diameter distribution are obtained on the basis of the volume-based distribution. For example, by using a measurement unit Mastersizer 2000 (Malvern Instruments Ltd.), a particle group is inserted into a stream of nitrogen to be able to measure the particle diameter and the particle diameter distribution with the attached analysis software (software using a Mie theory and based on the volume-based distribution).

Further, for the display panel in which display media comprised of a particle group are driven in a space filled with gas, it is important to control the gas located in the space and surrounding the display media between the panel substrates, which contributes to improvement of display stability. More specifically, it is important to set a relative humidity of the gas in the space at 60%RH or lower, preferably, at 50%RH or lower at 25°C.

The space described above represents a portion existing between the opposing substrate 1 and substrate 2 in FIGS. 1(a) and 1(b) through FIG. 4 and FIG. 5, excluding the electrodes 5, 6 (when being provided on the side where the substrates face each other), a portion occupied by the display media 3W, 3B, a portion occupied by the partition wall 4 and a sealing portion of the display panels, that is, the space described above indicates a gas portion that is brought in contact with the display media. Any type of gas can be used as the gas in the spaces described above, provided that humidity thereof falls within the humidity range described above. However, it is preferable to use a dried air, dried nitrogen, dried argon, dried helium, dried carbon dioxide, dried methane and the like. This gas needs to be sealed in the display panels so as to keep the humidity, and it is important, for example, to fill the display media, build the display panels and implement other processes under a predetermined humidity environment, and then, to apply the seal material and sealing method to prevent the wet from intruding from the outside.

The space between the substrates of the display panel according to the present invention is set so as to be able to move the display media and maintain contrast, and is adjusted, generally, in a range of 10 to 500 $\mu$m, preferably, in a range of 10 to 200 $\mu$m. In a case of the display panel in which the chargeable particles are moved, the space is set in a range of 10 to 100 $\mu$m, preferably, in a range of 10 to 50 $\mu$m.

It is preferable that the ratio by volume of the display media in the space filled with gas between the opposing substrates is in a range of 5 to 70%, and more preferably, in a range of 5 to 60%. Note that, in a case where the ratio exceeds 70%, movement of the display media is adversely affected, and on the other hand, in a case where the ratio is less than 5%, the contrast is likely to become unclear.

Yet further, examples of the present invention will be described.

[Example 1]

A back side substrate is prepared by: sputtering copper with a thickness of 1 $\mu$m on a polyethylene terephthalate (PET) film having a thickness of 100 $\mu$m to form a thin copper film; forming a line electrode on one side thereof, and a pad-like pattern for mounting on the other side thereof; forming a hole with a laser at a position where the line electrode and the pad for mounting (connection electrode) are connected, and applying a copper plating with a thickness of 1 $\mu$m so as not to protrude from the width of the electrode, to obtain a through-hole connection. As for a display side substrate, a display panel is prepared by using a substrate obtained by: sputtering an ITO film on a polyethylene terephthalate (PET) film having a thickness of 100 $\mu$m; and, forming a pattern of a line electrode.

[Example 1-1]

In Example 1, both a width of the copper line electrode formed on the back side substrate and a width of a copper pad are set to 300 $\mu$m, and a hole having a diameter of 150 $\mu$m is formed with a laser.

[Example 1-2]

In Example 1, both a width of the copper line electrode formed on the back side substrate and a width of a copper pad are set to 250 $\mu$m, and a hole having a diameter of 150 $\mu$m is formed with a laser.

[Example 1-3]

In Example 1, both a width of the copper line electrode formed on the back side substrate and a width of a copper pad are set to 200 $\mu$m, and a hole having a diameter of 80 $\mu$m is formed with a laser.

[Example 1-4]

In Example 1, both a width of the copper line electrode formed on the back side substrate and a width of a copper pad are set to 300 $\mu$m, and a hole having a diameter of 100 $\mu$m is formed with a laser.

[Example 1-5]

In Example 1, both a width of the copper line electrode formed on the back side substrate and a width of a copper pad are set to 200 $\mu$m, and a hole having a diameter of 150 $\mu$m is formed with a laser.

[Example 2]

A back side substrate is prepared by: sputtering nickel with a thickness of 0.1 $\mu$m on a PET film having a thickness of 75 $\mu$m to form a thin nickel film; forming a line electrode on one side thereof, and a pad-like pattern for mounting on the other side thereof; forming a hole with a laser at a position where the line electrode and the pad for mounting (connection electrode) are connected, and applying a copper plating with a thickness of 3 $\mu$m on the nickel electrode so as not to protrude from the width of the electrode, to obtain a through-hole connection. As for a display side substrate, a display panel is prepared by using a substrate obtained by: sputtering an ITO film on a PET film having a thickness of 75 $\mu$m; and,

forming a pattern of a line electrode.

[Example 2-1]

In Example 2, both a width of the nickel line electrode formed on the back side substrate and a width of a nickel pad are set to 300 μm, and a hole having a diameter of 150 μm is formed with a laser.

[Example 2-2]

In Example 2, both a width of the nickel line electrode formed on the back side substrate and a width of a nickel pad are set to 250 μm, and a hole having a diameter of 100 μm is formed with a laser.

[Example 2-3]

In Example 2, both a width of the nickel line electrode formed on the back side substrate and a width of a nickel pad are set to 200 μm, and a hole having a diameter of 80 μm is formed with a laser.

[Example 2-4]

In Example 2, both a width of the nickel line electrode formed on the back side substrate and a width of the nickel pad are set to 300 μm, and a hole having a diameter of 100 μm is formed with a laser.

[Example 2-5]

In Example 2, both a width of the nickel line electrode formed on the back side substrate and a width of a nickel pad are set to 200 μm, and a hole having a diameter of 100 μm is formed with a laser.

All of Example 1-1 through Example 1-5 in Example 1, and Example 2-1 through Example 2-5 in Example 2 are outside the information display area and are portions that do not contribute to information display. More specifically, a flexible display panel (information display device) having reduced frame width can be obtained.

These are descriptions of preferred embodiments of the present invention. However, the present invention is not limited to the specific embodiments, and it is possible to make various modifications and changes within a spirit and gist of the present invention described in the scope of claims.

INDUSTRIAL APPLICABILITY

An information display device according to the present invention is suitable for use in a display unit of various electronic devices including: a display unit of a mobile device such as a notebook computer, an electronic notebook, a mobile-type information device called a PDA (personal digital assistance), a cell phone and a handy terminal; a display device of an electronic paper such as an electronic book, an electronic newspaper and an electronic manual (electronic instruction manual), a message board such as a billboard, a poster, a blackboard and a whiteboard, an electronic desktop calculator, an electrical appliance, an automobile part and the like; a card display unit of a point card, an IC card and the like; a display unit of an electronic advertisement, an information board, an electronic POP (point of presence, point of purchase advertizing), an electronic price tag, an electronic price shelf-tag, an electronic music score and a RFID device; and, a POS terminal, a car-navigation device, clock and the like.

Further, the information display device according to the present invention is suitable for use as a rewritable paper in which a display is rewritten by electrically connecting with external rewriting means, and thereafter, the display continues after the connection is terminated.

It should be noted that various drive types can be used for the driving type of the information display device, which include: a passive matrix drive type and static drive type that do not use any switching element in the panel itself, and an active drive type using a TFT element.

**Claims**

1. An information display device, in which a display medium having an optical reflectivity and comprised of a particle group containing particles that can be electrically driven is sealed between two panel substrates arranged so as to face each other, at least one of which panel substrates is transparent, and, the display medium is electrically moved via a pair of electrodes provided to the panel substrates and forming a pixel, thereby to display information, wherein

the information display device has a structure in which a back side substrate, which is one of the two substrates, is connected with a wiring substrate;

a first through-hole penetrating the back side substrate for electrically connecting electrodes provided on a front and a rear surfaces of the back side substrate is formed on the back side substrate, and the wiring substrate is connected with the electrode on the rear surface side within an area of the back side substrate; and,

a second through-hole for connecting an electrode provided on a display side substrate, which is the other substrate of the two panel substrates, with the electrode provided on the rear surface of the back side substrate is further formed.

2. The information display device according to claim 1, wherein

an electronic component for controlling drive of the display medium is provided on the wiring substrate.

**3.** The information display device according to claim 1 or 2, wherein the back side substrate is a flexible substrate, and the electrodes provided on the front and the rear surfaces are metal substrates.

**4.** The information display device according to any one of claims 1 to 3, wherein the wiring substrate is connected with the electrode provided on the rear surface of the back side substrate so as to direct toward the inner side of an area of the back side substrate and so as not to protrude externally from the area of the back side substrate.

**5.** The information display device according to any one of claims 1 to 4, wherein the particle that can be electrically driven is a chargeable particle, and the display medium comprised of the particle group containing said chargeable particles is moved by applying an electric field generated between the pair of electrodes provided to the panel substrates and forming the pixel, thereby to display information.

**6.** The information display device according to any one of claims 1 to 4, wherein the pair of electrodes provided to the panel substrates and forming the pixel are opposing electrodes formed such that line electrodes provided to the respective two panel substrates are arranged so as to face each other and perpendicularly intersect each other.

# FIG. 1

(a)

3Wa    6    2

}3W

}3B

4    TFT    3Ba    5    1

(b)

3Ba    6    2

}3B

}3W

4    TFT    3Wa    5    1

# FIG. 2

# FIG. 3

(a)

(b)

# FIG. 4

# FIG. 5

# FIG. 6

(a)

(b)

(c)

(d)

# FIG. 7

(a)

5-1

1

5-2

(b)

5-1

1

5-2

7

(c)

5-1

1

5-2

8    7

# FIG. 8

# FIG. 9

(a)

(b)

## INTERNATIONAL SEARCH REPORT

| | International application No. |
|---|---|
| | PCT/JP2009/064798 |

A.   CLASSIFICATION OF SUBJECT MATTER
G02F1/167(2006.01)i, G02F1/17(2006.01)i, G09F9/00(2006.01)i

According to International Patent Classification (IPC) or to both national classification and IPC

B.   FIELDS SEARCHED

Minimum documentation searched (classification system followed by classification symbols)
G02F1/167, G02F1/17, G09F9/00, G02F1/1345

Documentation searched other than minimum documentation to the extent that such documents are included in the fields searched
Jitsuyo Shinan Koho          1922–1996   Jitsuyo Shinan Toroku Koho   1996–2009
Kokai Jitsuyo Shinan Koho    1971–2009   Toroku Jitsuyo Shinan Koho   1994–2009

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y | JP 2007-322781 A  (Bridgestone Corp.),<br>13 December, 2007 (13.12.07),<br>Par. No. [0015]; Fig. 4<br>(Family: none) | 1-6 |
| Y | JP 2002-40458 A  (Seiko Epson Corp.),<br>06 February, 2002 (06.02.02),<br>Par. Nos. [0061] to [0070]; Fig. 9<br>(Family: none) | 1-6 |

☐  Further documents are listed in the continuation of Box C.        ☐  See patent family annex.

| | |
|---|---|
| *     Special categories of cited documents:<br>"A"   document defining the general state of the art which is not considered   to<br>be of particular relevance<br>"E"   earlier application or patent but published on or after the international filing<br>date<br>"L"   document which may throw doubts on priority claim(s) or which is<br>cited to establish the publication date of another citation or other<br>special reason (as specified)<br>"O"   document referring to an oral disclosure, use, exhibition or other means<br>"P"   document published prior to the international filing date but later than the<br>priority date claimed | "T"   later document published after  the international filing date or priority<br>date and not in conflict with the application but cited to understand<br>the principle or theory underlying the invention<br>"X"   document of particular relevance; the claimed invention cannot be<br>considered novel or cannot be considered to involve an inventive<br>step when the document is taken alone<br>"Y"   document of particular relevance; the claimed invention cannot be<br>considered to involve an inventive step when the document is<br>combined with one or more other such documents, such combination<br>being obvious to a person skilled in the art<br>"&"   document member of the same patent family |

| Date of the actual completion of the international search | Date of mailing of the international search report |
|---|---|
| 29 September, 2009 (29.09.09) | 06 October, 2009 (06.10.09) |

| Name and mailing address of the ISA/<br>Japanese Patent Office | Authorized officer |
|---|---|
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000098417 A